(19) Europäisches Patentamt
European Patent Office
Office européen des brevets

(11) EP 4 389 262 A1

(12) **EUROPEAN PATENT APPLICATION**
published in accordance with Art. 153(4) EPC

(43) Date of publication:
26.06.2024 Bulletin 2024/26

(21) Application number: 22858271.4

(22) Date of filing: 27.07.2022

(51) International Patent Classification (IPC):
*B01D 59/34* (2006.01)        *B01D 59/04* (2006.01)
*C01B 13/10* (2006.01)

(52) Cooperative Patent Classification (CPC):
**B01D 59/04; B01D 59/34; C01B 13/10**

(86) International application number:
**PCT/JP2022/028944**

(87) International publication number:
**WO 2023/021950 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 16.08.2021 JP 2021132149

(71) Applicant: Taiyo Nippon Sanso Corporation
Tokyo 142-8558 (JP)

(72) Inventors:
• IGARASHI, Takehiro
Tokyo 142-8558 (JP)
• KIHARA, Hitoshi
Tokyo 142-8558 (JP)
• KAMBE, Takashi
Tokyo 142-8558 (JP)

(74) Representative: HGF
HGF Limited
1 City Walk
Leeds LS11 9DX (GB)

(54) **OXYGEN ISOTOPE CONCENTRATION METHOD AND OXYGEN ISOTOPE CONCENTRATION APPARATUS**

(57)    An object of the present invention is to provide an oxygen isotope concentration method and an oxygen isotope concentration apparatus that can safely and stably supply ozone without increasing the size of the device. The present invention provides an oxygen concentration method including: a photoreaction step of irradiating a first mixed fluid (F 1) in which oxygen and a diluent substance (DS) are mixed with a laser, selectively decomposing ozone containing an oxygen isotope, and generating oxygen containing an oxygen isotope, and obtaining a second mixed fluid (F2) in which the oxygen, the ozone, and the diluent substance (DS) are mixed; a liquid storage section introduction step of introducing the second mixed fluid (F2) into a liquid storage section (10) and liquefying it; and a separation step of introducing the second mixed fluid (F2) with hydraulic head obtained by liquefying the second mixed fluid (F2) and storing it in the liquid storage section (10), into a separation column (21), distilling the second mixed fluid (F2) which has liquefied, and separating into a third mixed fluid (F3) in which ozone and the diluent substance (DS) are mixed, and product oxygen (PO) in which oxygen isotope heavy components are concentrated; wherein the liquid storage section (10) can store the liquefied second mixed fluid (F2) without being affected by heat input.

FIG. 1

## Description

TECHNICAL FIELD

The present invention relates to an oxygen isotope concentration method and an oxygen isotope concentration apparatus.

BACKGROUND ART

A method using a photochemical reaction (hereinafter also referred to as "photoreaction") is known as a method for concentrating oxygen isotopes.

Patent Document 1 discloses an oxygen isotope concentration method including: an ozonization step of ozonizing a part of a raw material oxygen, and obtaining a first mixed fluid in which oxygen and ozone are mixed; a first distillation step of introducing and distilling the first mixed fluid and a diluent substance in a first distillation column, and separating the first mixed fluid into oxygen and a second mixed fluid in which ozone and the diluent substance are mixed; a photodecomposition step of irradiating the second mixed fluid with a laser, selectively decomposing ozone containing an oxygen isotope, generating oxygen containing the oxygen isotope, and obtaining a third mixed fluid in which the oxygen, ozone, and the diluent substance are mixed; a liquid storage section introducing step of introducing the third mixed fluid into a liquid storage section; a second distillation step of introducing the third mixed fluid into a second distillation column with hydraulic head obtained by the liquid storage section, and distilling and separating the third mixed fluid into a fourth mixed fluid containing ozone and the diluent substance and a product oxygen enriched with oxygen isotope heavy components; an ozone decomposition step of decomposing ozone in the fourth mixed fluid; and a diluent substance recovery step of recovering the diluent substance from the fourth mixed fluid in which ozone has been decomposed. In addition, an oxygen isotope concentration apparatus for carrying the oxygen isotope concentration method is also disclosed, which includes an ozonizer that ozonizes a part of the raw material oxygen into ozone; a first distillation column that performs the first distillation step; a photoreaction cell that selectively decomposes ozone containing an oxygen isotope, the liquid storage section into which the third mixed fluid is introduced; a second distillation column for performing the second distillation step; an ozone decomposition device that decomposes ozone, and a third distillation column that performs the diluent substance recovery step.

PRIOR ART DOCUMENTS

PATENT DOCUMENTS

Patent Document 1: Japanese Patent No. 5620705

SUMMARY OF INVENTION

PROBLEM TO BE SOLVED BY THE INVENTION

In the oxygen isotope concentration method and oxygen isotope concentration apparatus disclosed in Patent Document 1, after generating oxygen gas containing an oxygen isotope in a photoreaction step, it is necessary to send gas in which oxygen, ozone, and the diluent substance are mixed to the subsequent distillation step, which has a higher pressure.

When ozone is decomposed in a non-isotope-selective manner due to heat, and the like during the gas delivery step, the photoreaction dilutes the oxygen which has been isotopically enriched. Accordingly, it is important to realize gas delivery without decomposing ozone.

In the oxygen isotope concentration method and apparatus disclosed in Patent Document 1, in the liquid storage section introduction step, a condensate is dripped into the liquid storage section by gravity, so it is necessary to place a condenser at the top of the liquid storage section. In order to install such equipment, the equipment becomes complicated and large.

In addition, in the oxygen isotope concentration method and apparatus disclosed in Patent Document 1, the liquefied third mixed fluid is evaporated by heat input from the outside into the liquid storage section, and the concentration of ozone, which is a high boiling point component in the liquid, is increased by the evaporation. If the evaporated gas is recondensed and the liquid is sufficiently mixed, ozone is not concentrated. However, in the oxygen isotope concentration method and apparatus disclosed in Patent Document 1, liquid mixing is not taken into account, and ozone concentration in the liquid increases. It has been reported that in the region at which the ozone concentration is 16% by volume or less, the ignition energy decreases as the ozone concentration increases (Takaaki Mizutani, "Minimum ignition energy of Ozone/Oxygen mixed gas", Occupational Safety and Health Research, (2009, Vol. 2, No. 1, p. 45-48). As the ozone concentration continues to increase, the risk of explosion increases. Therefore, for safe apparatus operation, it is essential to take measures to prevent the ozone concentration from changing due to external factors such as heat input.

Furthermore, heat input from the outside into the liquid storage section evaporates a part of the liquid and generates bubbles, which rise in the liquid. Since the hydraulic head fluctuates when bubbles are generated, it becomes difficult to control a valve for sending the liquid into the next second distillation column, leading to further fluctuations in the hydraulic head. Fluctuations in hydraulic head lead to pressure fluctuations in the photoreaction step, which also affects the isotope concentration of the product gas.

An object of the present invention is to provide an oxygen isotope concentration method and an oxygen isotope concentration apparatus that can safely and stably supply ozone without increasing the size of the device.

MEANS FOR SOLVING THE PROBLEM

In order to solve the above problems, the present invention provides the following oxygen isotope concentration method and oxygen isotope concentration apparatus.

[1] An oxygen concentration method, including:

a photoreaction step of irradiating a first mixed fluid in which oxygen and a diluent substance are mixed with a laser, selectively decomposing ozone containing an oxygen isotope, and generating oxygen containing an oxygen isotope, and obtaining a second mixed fluid in which the oxygen, the ozone, and the diluent substance are mixed;
a liquid storage section introduction step of introducing the second mixed fluid into a liquid storage section and liquefying it; and
a separation step of introducing the second mixed fluid with hydraulic head obtained by liquefying the second mixed fluid and storing it in the liquid storage section, into a separation column, distilling the second mixed fluid which has liquefied, and separating into a third mixed fluid in which ozone and the diluent substance are mixed, and product oxygen in which oxygen isotope heavy components are concentrated;
wherein the liquid storage section can store the liquefied second mixed fluid without being affected by heat input.

[2] The oxygen isotope concentration method according to [1], wherein the oxygen isotope concentration method further includes:

before the photoreaction step,
an ozonization step of ozonizing a part of a raw material oxygen, and obtaining a 0th mixed fluid in which oxygen and ozone are mixed; and
a distillation step of introducing the 0th mixed fluid and the diluent substance into a first distillation column, distilling them, and separating them into the first mixed fluid in which ozone and the diluent substance are mixed and oxygen.

[3] The oxygen isotope concentration method according to [1] or [2], wherein the oxygen isotope concentration method further includes:

after the separation step,
an ozone decomposition step of decomposing ozone in the third mixed fluid; and
a diluent substance recovery step of introducing the third mixed fluid in which ozone has been decomposed into a second distillation column, distilling it, and recovering the diluent substance.

[4] The oxygen isotope concentration method according to any one of [1] to [3], wherein the liquid storage section includes an inner tube into which the second mixed fluid is introduced, and an outer tube through which a low-temperature fluid capable of condensing the second mixed fluid introduced into the inner tube flows, and the liquid storage section has a double tube structure that allows the second mixed fluid to be stored in the inner tube without being affected by heat input.

[5] The oxygen isotope concentration method according to [4], wherein the low-temperature fluid is liquid nitrogen.

[6] The oxygen isotope concentration method according to any one of [1] to [5], wherein the diluent substance is at least one selected from the group consisting of krypton, xenon, radon, and carbon tetrafluoride.

[7] An oxygen isotope concentration apparatus for carrying out the oxygen isotope concentration method according to any one of [1] to [6], including:

a photoreaction cell that selectively decomposes ozone containing an oxygen isotope;
a liquid storage section into which the second mixed fluid is introduced and liquefied; and
a separation column that carries out the separation step.

[8] The oxygen isotope concentration apparatus according to [7], wherein the liquid storage section includes an inner tube into which the second mixed fluid is introduced, and an outer tube through which a low-temperature fluid capable of condensing the second mixed fluid introduced into the inner tube flows, and the liquid storage section has a double tube structure that allows the second mixed fluid to be stored in the inner tube without being affected by heat input.

EFFECTS OF THE INVENTION

According to the present invention, it is possible to provide an oxygen isotope concentration method and an oxygen isotope concentration apparatus that can safely and stably supply ozone without increasing the size of the device.

BRIEF DESCRIPTION OF DRAWINGS

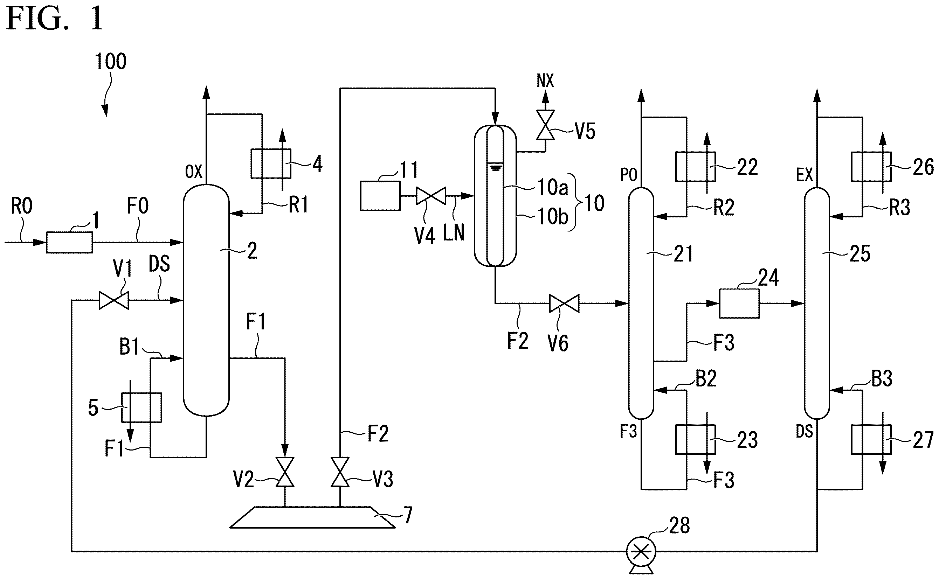

[FIG. 1] FIG. 1 is a schematic diagram showing an example of an oxygen isotope concentration apparatus for carrying out an oxygen isotope concentration method according to the present embodiment.

DETAILED DESCRIPTION OF THE PREFERRED EMBODIMENTS

An example of an embodiment of the present invention (hereinafter also simply referred to as "the present embodiment") will be described in detail below, but the present invention is not limited to the embodiment described below, and various modifications can be made without departing from the gist of the present invention.
Hereinafter, the oxygen isotope concentration method (hereinafter also simply referred to as "concentration method") and oxygen isotope concentration apparatus (hereinafter simply referred to as "concentration apparatus") according to the present embodiment will be explained with reference to FIG. 1 as appropriate.

[Oxygen isotope concentration apparatus]

The oxygen isotope concentration apparatus 100 shown in FIG. 1 of the present embodiment includes an ozonizer 1, a first distillation column 2, a first condenser 4, a first reboiler 5, a photoreaction cell 7, a liquid storage section 10, a low-temperature fluid source 11, a separation column 21, a second condenser 22, a second reboiler 23, a second distillation column 25, a third condenser 26, a third reboiler 27, a pump 28, a valve V1 arranged in a flow path connecting the second distillation column 25 and the first distillation column 2, a valve V2 arranged in the flow path connecting the first distillation column 2 and the photoreaction cell 7, a valve V3 arranged in the flow path connecting the photoreaction cell 7 and the liquid storage section 10, and a valve V6 arranged in the flow path connecting the liquid storage section 10 and the separation column 21.

<Ozonizer>

The ozonizer 1 is a device that generates ozone by ozonizing a part of a raw material oxygen RO, and generates a 0th mixed fluid F0 in which oxygen and ozone are mixed. The ozonizer 1 is not particularly limited as long as it can generate ozone, and any conventionally known ozonizer can be used. The 0th mixed fluid F0 generated is introduced into a middle part of the first distillation column 2.

<First distillation column>

The first distillation column 2 is a distillation column for distilling the mixture of the 0th mixed fluid F0 and a diluent substance DS. By distillation, unnecessary oxygen is discharged from the top of the first distillation column 2, and a first mixed fluid F1 in which concentrated ozone and the diluent substance are mixed is led out from the bottom of the first distillation column 2.

<First condenser>

The first condenser 4 is a device for liquefying a part of oxygen OX led out from the top of the first distillation column 2 and introducing it into the top of first distillation column 2 as a first reflux liquid R1.

<First reboiler>

The first reboiler 5 is a device for vaporizing a part of the first mixed fluid F1 led out from the bottom of the first distillation column 2 and introducing it into the first distillation column 2 as a first ascending gas B1.

<Photoreaction cell>

The photoreaction cell 7 is a device for irradiating the first mixed fluid F1 led out and introduced from near the bottom of the first distillation column 2 with a laser to concentrate the target isotope as oxygen molecules, and generating a second mixed fluid F2 in which a small amount of oxygen, ozone, and the diluent substance are mixed.

<Liquid storage section>

The liquid storage section 10 is a device for liquefying and storing the second mixed fluid F2. The second mixed fluid F2 which has liquefied is led out from the bottom of the liquid storage section 10, and introduced into the separation column 21 by the hydraulic head obtained by liquefying the second mixed fluid F2 and storing it in the liquid storage section 10.

The liquid storage section 10 shown in FIG. 1 has a double tube structure including an inner tube 10a and an outer tube 10b. A low-temperature fluid source 11 is connected to the outer tube 10b of the liquid storage section 10. A valve V4 is arranged in a flow path connecting the outer tube 10b of the liquid storage section 10 and the low-temperature fluid source 11. Further, a flow path for discharging the vaporized low-temperature fluid NX is connected to the outer tube 10b of the liquid storage section 10. A valve V5 is arranged in a flow path for discharging the vaporized low-temperature fluid connected to the outer tube 10b of the liquid storage section 10. The outer tube 10b is surrounded by a heat insulating material. The inner tube 10a is configured to be able to store the liquefied second mixed fluid F2 without being affected by heat input due to the heat insulating material and the low-temperature fluid in the outer tube 10b.

<Separation column>

The separation column 21 is a distillation column for distilling the second mixed fluid F2 introduced from the bottom of the liquid storage section 10. By distillation, product oxygen PO enriched with the target oxygen isotope is led out from the top of the separation column 21, and a third mixed fluid F3, in which ozone and the diluent substance are mixed, is led out from the bottom thereof. Most of the product oxygen PO led out from the top of the separation column 21 is recovered as a product.

<Second condenser>

The second condenser 22 is a device for liquefying a part of the product oxygen PO led out from the top of the separation column 21 and introducing it into the top of the separation column 21 as a second reflux liquid R2.

<Second reboiler>

The second reboiler 23 is a device for vaporizing a part of the third mixed fluid F3 led out from the bottom of the separation column 21 and introducing it into the separation column 21 as a second ascending gas B2.

<Ozone decomposition device>

The ozone decomposition device 24 is a device for completely decomposing ozone in the remainder of the third mixed fluid F3 that has been led out from near the bottom of the separation column 21. The third mixed fluid F3 led out from the ozone decomposition device 24 contains only oxygen and the diluent substance.

<Second distillation column>

The second distillation column 25 is a distillation column for distilling the third mixed fluid F3 in which ozone has been decomposed in the ozone decomposition device 24. Due to the distillation, oxygen with a reduced isotope concentration which is a low boiling point component is discharged from the top of the second distillation column 25 as exhaust gas EX, and the diluent substance DS is led out from the bottom thereof.

<Third condenser>

The third condenser 26 is a device for liquefying a part of exhaust gas EX discharged from the top of the second distillation column 25 and introducing it from the top of the second distillation column 25 as a third reflux liquid R3.

<Third reboiler>

The third reboiler 27 is a device for vaporizing a part of the diluent substance DS introduced from the bottom of the second distillation column 25 and introducing it into the second distillation column 25 as a third ascending gas B3.
The pump 28 is a booster pump for increasing the pressure of the remainder of the diluent substance DS led out from the bottom of the second distillation column 25 and causing it to flow back into the first distillation column 2. The valve V1 is arranged in the flow path connecting the pump 28 and the first distillation column 2.

[Concentration method]

The concentration method of the present embodiment may include a photoreaction step, a liquid storage section introduction step, and a separation step among the steps described below. The concentration method of the present embodiment may include an ozonization step and a distillation step. The concentration method of the present embodiment may include an ozone decomposition step, and a diluent substance recovery step. Furthermore, the concentration method of the present embodiment may include all the steps of an ozonization step, a distillation step, a photoreaction step, a liquid storage section introduction step, a separation step, an ozone decomposition step, and a diluent substance recovery step.

<Ozonization step>

The ozonization step is a step of ozonizing a part of the raw material oxygen RO to obtain the 0th mixed fluid F0 in which oxygen and ozone are mixed.
As shown in FIG. 1, the raw material oxygen RO is introduced into the ozonizer 1 to ozonize a part of the raw material oxygen RO.
Through the ozonization step, the 0th mixed fluid F0 led out from the ozonizer 1 becomes a fluid in which oxygen and ozone are mixed.

<Distillation step>

The distillation step is a step of introducing the 0th mixed fluid F0 obtained in the ozonization step and the diluent substance DS into the first distillation column 2 and distilling, and separating it into the first mixed fluid F1 in which ozone and the diluent substance are mixed and oxygen OX.
Specifically, the 0th mixed fluid F0 is introduced into the middle part of the first distillation column 2, the diluent substance DS is introduced into the first distillation column 2 by opening the valve V1, and distilling. Through this distillation, unnecessary oxygen OX is discharged from the top of the first distillation column 2, and the first mixed fluid F1 in which concentrated ozone and the diluent substance DS are mixed is led out from the bottom of the first distillation column 2.
Note that the first distillation column 2 is preferably operated at the same pressure as the photoreaction cell 7, or at a slightly higher pressure, taking into account that pipe pressure loss occurs during gas transportation.
The introduction position of the diluent substance DS may be either above or below the introduction position of the 0th mixed fluid F0. It is also possible to mix the diluent substance DS with the 0th mixed fluid F0 and introduce the mixture into the first distillation column 2.
A part of the oxygen OX led out from the top of the first distillation column 2 is introduced into the first condenser 4 and liquefied, and is introduced into the top of the first distillation column 2 as a first reflux liquid R1. Further, a part of the first mixed fluid F 1 led out from the bottom of the first distillation column 2 is introduced into the first reboiler 5, vaporized, and introduced into the first distillation column 2 as the first ascending gas B1.
The diluent substance DS is introduced to prevent ozone separated from oxygen from self-decomposing when concentrated to a high concentration. Therefore, the diluent substance DS is preferably a substance that has the property of raising the lower explosive limit of ozone when mixed with ozone. Examples of such substances include rare gases such as krypton (Kr), xenon (Xe), and radon (Rn), and fluorinated hydrocarbons such as trifluoromethane ($CHF_3$) and carbon tetrafluoride ($CF_4$). The diluent substance DS is preferably at least one selected from the group consisting of krypton, xenon, radon, and carbon tetrafluoride, more preferably at least one selected from the group consisting of krypton, xenon, and carbon tetrafluoride, and most preferably carbon tetrafluoride. The diluent substance may be used alone, or two or more diluent substances may be used in combination.

\<Photoreaction step\>

The photoreaction step is a step of irradiating the first mixed fluid F 1 in which ozone and the diluent substance DS are mixed with a laser to selectively decompose ozone containing an oxygen isotope, generating oxygen containing the oxygen isotope, and obtaining the second mixed fluid F2 in which the oxygen, ozone, and the diluent substance DS are mixed.

In the photoreaction step, the remainder of the first mixed fluid F1 led out from near the bottom of the first distillation column 2 is introduced into the photoreaction cell 7 by operating the valve V2. In the photoreaction cell 7, a laser device (not shown) emits laser to concentrate a target isotope as an oxygen molecule.

Here, there are 18 types, $^{16}O^{16}O^{16}O$, $^{16}O^{16}O^{17}O$, $^{16}O^{17}O^{16}O$, $^{16}O^{16}O^{18}O$, $^{16}O^{18}O^{16}O$, $^{16}O^{17}O^{17}O$, $^{17}O^{16}O^{17}O$, $^{16}O^{17}O^{18}O$, $^{17}O^{16}O^{18}O$, $^{16}O^{18}O^{17}O$, $^{17}O^{17}O^{17}O$, $^{16}O^{18}O^{18}O$, $^{18}O^{16}O^{18}O$, $^{17}O^{17}O^{18}O$, $^{17}O^{18}O^{17}O$, $^{17}O^{18}O^{18}O$, $^{18}O^{17}O^{18}O$, and $^{18}O^{18}O^{18}O$ of ozone isotopologues (molecular species containing an isotope) based on the types of oxygen isotopes and their combinations.

Oxygen molecules are generated by decomposing specific isotopologues of ozone (eg, $_{16}O_{16}O_{18}O$, $_{16}O_{17}O_{18}O$, $_{16}O_{18}O_{18}O$, and the like) by irradiating a laser with the absorption line wavelength of the isotopologue containing the oxygen isotope to be concentrated (e.g., $^{18}O$) among these ozone isotopologues.

For example, when decomposing only ozone ($_{16}O_{16}O_{17}O$) containing the target oxygen isotope ($_{17}O$), a reaction shown in the following reaction formula occurs.

$$^{16}O^{16}O^{17}O + h\nu \rightarrow O_2 + O$$

$$O_3 + O \rightarrow 2O_2$$

In the formulae, h is Planck's constant ($6.62607015 \times 10^{-34}$ Js), and $\nu$ is the frequency of the laser ($s^{-1}$).

The decomposition of the ozone isotopologue above is greatly influenced by pressure and temperature conditions. An increase in pressure or temperature causes a broadening of the wavelength width of the absorption line, called absorption line broadening. When the wavelengths of the absorption line of each isotopologue overlap, it becomes difficult to selectively decompose the isotopologue.

Therefore, in order to suppress the absorption line broadening, ozone decomposition in the photoreaction cell 7 is preferably performed under reduced pressure and low-temperature. The pressure in the photoreaction cell 7 is preferably 15 kPa or less, more preferably 10 kPa or less. The temperature in the photoreaction cell 7 is preferably 100 to 250 K, and more preferably 100 to 173 K.

By decomposing the ozone containing the target oxygen isotope as described above, the fluid led out from the photoreaction cell 7 becomes the second mixed fluid F2 in which the oxygen, ozone, and the diluent substance DS are mixed.

Further, the flow rate of the second mixed fluid F2 which is led out from the photoreaction cell 7 and introduced into the separation column 21 can be calculated from the mass balance of oxygen in the separation column 21 and the photoreaction cell 7. That is, there is a relationship shown in the following formula (1) between the amount of oxygen led out from the photoreaction cell 7 and the amount of oxygen led out from the top of the separation column 21.

Amount of oxygen in the fluid led out from the photoreaction cell = Amount of oxygen led out from the top of the separation column

Here, when the oxygen volume ratio in the fluid led out from the photoreaction cell 7 is denoted by $X_{O2,2}$, the total amount of the fluid led out from the photoreaction cell 7 is denoted by $Q_2$, the oxygen volume ratio in the fluid led out from the top of the separation column 21 is denoted by $X_{O2,3}$, the total amount of the fluid led out from the top of the separation column 21 is denoted by $Q_3$, and the formula (1) above is rewritten, the following formula (2) is obtained.

$$X_{O3,2} \cdot Q_2 = X_{O3,3} \cdot Q_3 \qquad (2)$$

In the formula (2) above, the subscript i in $X_{i,j}$ and $Q_j$ is the substance name, j is the position in the step, j = 1 means the time point of introduction into the photoreaction cell 7, j = 2 means the time point leading out from the photoreaction cell 7, and j = 3 is the time point leading out from the separation column 21.

Assuming that 5 kg of $H_2{}^{17}O$ containing 10 atom% of oxygen isotope $^{17}O$ is produced per year using the concentration method of the present embodiment, the volumetric flow rate $X_{O2,3} \cdot Q_3$ of the product oxygen PO led out from the top of the separation column 21 is 0.0056 L/min (0°C, 1atm).

Note that the oxygen isotope $^{17}O$ concentration in the product oxygen PO is unrelated to the production amount of the product oxygen PO, and depends on the selectivity of the ozone isotopologue in the photoreaction step.

Further, the higher the ozone concentration in the photoreaction cell 7, the more preferable it is, but the more difficult it becomes to handle safely.

Here, when the ozone concentration in the fluid (first mixed fluid F1) introduced into the photoreaction cell 7 is assumed to be $X_{O3,1} = 0.15$, and the diluent substance concentration in the fluid (first mixed fluid F1) introduced into the photoreaction cell 7 is assumed to be $X_{CF4,1} = 0.85$, the concentration ratio Y of the specific ozone isotopologue with respect to the total amount of ozone at the inlet of the photoreaction cell 7 is calculated.

First, pure oxygen gas having an isotopic composition ratio of $^{16}O : ^{17}O : ^{18}O = 0.485 : 0.030 : 0.485$ is used as the raw material oxygen RO. The raw material oxygen RO is introduced into the ozonizer 1 to generate ozone. At this time, it is assumed that the isotope effect during the ozone generation can be almost ignored. That is, the abundance ratio of isotopologue $^{16}O^{16}O^{17}O$ in ozone can be determined by calculating the probability that each decomposed oxygen atom will bond. If $Y_{667}$ is the abundance ratio of $^{16}O^{16}O^{17}O$ in ozone, then $Y_{667} = 0.014$.

The decomposition rate of the $^{16}O^{16}O^{17}O$ by the laser in the photoreaction step can be adjusted to an arbitrary value by adjusting the optical path length of the photoreaction cell 7 or the light intensity of the laser. When the $^{16}O^{16}O^{17}O$ component of ozone isotopologue is decomposed to a decomposition rate Z=0.80 at the outlet of the photoreaction cell 7, the amount of oxygen $X_{O2,2} \cdot Q_2$ generated in the fluid (second mixed fluid F2) at the outlet of the photoreaction cell 7 has the relationship shown in formula (3) below.

$$X_{O2,2} \cdot Q_2 = 1.5 \cdot Z \cdot X_{O3,1} \cdot Y_{667} \cdot Q_1$$

$$= 1.5 \times 0.80 \times 0.15 \times 0.014 \times Q_1$$

$$\doteqdot 2.52 \times 10^{-3} \times Q_1 \qquad (3)$$

Here, the coefficient 1.5 in the formula (3) means that when one molecule of ozone is decomposed, 1.5 oxygen molecules are generated, and can be calculated from the stoichiometric formula assuming that one atomic oxygen produced by the ozone decomposition reaction shown in the reaction formula above decomposes one ozone molecule.

From the above, $Q_1 = 2.21$ L/min (0°C, 1 atm) can be calculated from the formula (2) and the formula (3) above.

<Liquid storage section introduction step>

The liquid storage section introduction step is a step of introducing the second mixed fluid F2 into the liquid storage section 10 and liquefying it. Since the liquid storage section 10 is cooled by the low-temperature fluid LN flowing around the inner tube 10a within the outer tube 10b, the liquefied second mixed fluid F2 can be stored without being affected by heat input.

The second mixed fluid F2 led out from the photoreaction cell 7 is introduced into the liquid storage section 10 by operating the valve V3 and liquefied. The portion of the liquid storage section 10 into which the second mixed fluid F2 is introduced is cooled to a temperature below the condensation point of the second mixed fluid F2 by the low-temperature fluid flowing within the outer tube 10b. Therefore, when the second mixed fluid F2 is introduced into the liquid storage section 10, the second mixed fluid F2 is condensed and liquefied. In addition, in order to shorten the startup time of the apparatus, the liquid storage section 10 may be filled with the diluent substance DS so that a constant liquid level is already maintained at the time of startup of the apparatus.

In order to introduce the second mixed fluid F2 from the photoreaction cell 7 into the separation column 21, in the liquid storage section introduction step, it is necessary to obtain a hydraulic head which corresponds to a differential pressure such that the pressure of the second mixed fluid F2 in the liquid storage section 10 is higher than the pressure of the separation column 21. Considering pressure loss due to pipes and valves, the hydraulic head with a larger differential pressure is preferable.

The low-temperature fluid is preferably any one selected from the group consisting of liquid hydrogen, liquid helium, and liquid nitrogen, and more preferably liquid nitrogen.

Below, a description will be given of the liquid storage section introduction step in a case in which the liquid storage section 10 has a double tube structure including the inner tube 10a and the outer tube 10b, and liquid nitrogen LN is used as the low-temperature fluid.

The valve V4 is operated to flow the liquid nitrogen LN from the liquid nitrogen source 11 into the outer tube 10b of the liquid storage section 10. At the same time, the valve V5 is opened to discharge evaporated nitrogen gas and overflowing liquid nitrogen (nitrogen NX) to the outside. The pressure inside the outer tube 10b is adjusted by adjusting the opening degrees of the valves V4 and V5. The pressure inside the outer tube 10b may be adjusted by arranging a pressure gauge and automatically controlling the valve V5 based on the measured value.

For example, when the pressure inside the outer tube 10b is 400 kPa, the temperature of the liquid nitrogen inside the outer tube 10b is 91 K under the saturation condition. The pressure inside the inner tube 10a is lower than the pressure of the photoreaction cell 7 (for example, 10 kPa). At this time, if the proportion of oxygen contained in the second mixed fluid F2 inside the inner tube 10a is ignored because the amount of oxygen is extremely small, the temperature at 10 kPa of the saturated liquid ozone will be 100 K, and the temperature at 10 kPa of the saturated liquid carbon tetrafluoride ($CF_4$), which is the diluent substance, will be 110 K. Accordingly, the temperature of the second mixed fluid F2 in a saturated liquid state inside the inner tube 10a falls within the range of 100 to 110K. The temperature of the liquid nitrogen inside the outer tube 10b is 91 K, which is sufficiently lower than the temperature of the second mixed fluid F2 inside the inner tube 10a, so it is possible to condense the second mixed fluid F2 inside the inner tube 10a.

As the condensation of the second mixed fluid F2 inside the inner tube 10a progresses, the liquefied second mixed fluid F2 accumulates in the lower part of the inner tube 10a while the pressure inside the inner tube 10a is maintained at 10 kPa or less. When the hydraulic head of the second mixed fluid F2 accumulated in the lower part of the inner tube 10a becomes higher than the pressure in the subsequent separation column 21, the liquefied second mixed fluid F2 can be introduced into the separation column 21 via the valve V6. The hydraulic head can be measured with a pressure gauge arranged at the bottom of the inner tube 10a of the liquid storage section 10 or with a differential pressure gauge that measures the differential pressure between the top and the bottom of the inner tube 10a.

Here, the hydraulic head of the liquefied second mixed fluid F2 inside the inner tube 10a, which is necessary for the pressure of the second mixed fluid F2 to become higher than the pressure of the separation column 21, is estimated. It is assumed that the separation column 21 is operated at a pressure of 150 kPa.

Since the amount of oxygen in the second mixed fluid F2 is small, it is ignored, and the liquefied second mixed fluid F2 is estimated as a mixed liquid of 10% by volume of ozone and 90% by volume of carbon tetrafluoride ($CF_4$). The average liquid density of the second mixed fluid F2 is approximately 1755 kg/m³. When the separation column 21 is operated at a pressure of 150 kPa, the hydraulic head required to generate a pressure difference, 140 kPa, between the pressure of 10 kPa inside the inner tube 10a and the pressure of 150 kPa in the separation column, is $140 \times 10^3$ (Pa) / (9.8 (m /s²)×1755 (kg/m³)) = 8.1 (m). In this case, in order to ensure the hydraulic head and the condensation heat transfer area, the height of the liquid storage section 10 is preferably 10 m or more including the outer tube 10b.

Assuming that the inner tube 10a of the liquid storage section 10 is not cooled with the low-temperature fluid and is only covered with a heat insulating layer made of a heat insulating material, the heat input Q [W] to the inner tube 10a is calculated using a cylindrical heat transfer formula (formula (4) below). Note that it is assumed that the influence of convective heat transfer between the inner tube 10a and outer tube 10b of the liquid storage section 10 can be ignored.

$$Q = 2\pi L \frac{T_1 - T_3}{\frac{1}{k_1} ln(D_2 / D_1) + \frac{1}{k_2} ln(D_3 / D_2)} \qquad \cdots (4)$$

In the formula (4),

Q [W] is the amount of heat input to the inner tube 10a,
L [m] is the length of the inner tube 10a,
$k_1$ [W / (m ▪ K)] is the thermal conductivity coefficient of the inner tube 10a,
$k_2$ [W / (m ▪ K)] is the thermal conductivity of the heat insulating layer covering the inner tube 10a,
$T_1$ [K] is the inner surface temperature of the inner tube 10a,
$T_3$ [K] is the temperature of the outermost layer of the heat insulating layer covering the inner tube 10a (ambient environment temperature),
$D_1$ [m] is the inner diameter of the inner tube 10a,
$D_2$ [m] is the outer diameter of the inner tube 10a, and
$D_3$ [m] is the entire outer diameter including the heat insulating layer covering the inner tube 10a.

When calculating by substituting L = 8.1 (m), k1 = 16.7 (W / (m ▪ K)) (typical value of SUS304), $k_2$ = 0.062 (W / (m ▪ K)) (catalog value of pearlite material used as a heat insulating material), $T_1$ = 110 (K), $T_3$ = 298.15 (K), $D_1$ = 10 (mm), $D_2$ = 12 (mm), and $D_3$ = 2 (m) in the cylindrical heat transfer formula (4) above, the amount of heat input to the inner tube 10a is Q = 116 W.

The time $t_1$ [min] until the liquefied second mixed fluid F2 accumulated in 8.1 m inside the inner tube 10a is completely evaporated due to heat input is calculated by the following formula (5). However, for simplicity, using the physical property values of carbon tetrafluoride ($CF_4$) which is the main component of the second mixed fluid F2. Also, it is assumed that there is no addition of the second mixed fluid F2 midway, and the evaporated second mixed fluid F2 can be discharged from the liquid storage section 10 without any problem.

$$t_1 = \frac{\left(\frac{D_1}{2}\right)^2 \pi L p_{CF4} \lambda_{CF4}}{Q} \times \frac{1}{60} \qquad \cdots (5)$$

$$= \frac{\left(\frac{0.01}{2}\right)^2 \pi \times 8.1 \times 1571 \times 131 \times 10^3}{116 \times 60} = 18.8 \min$$

In the formula (5) above, $\rho_{CF4}$ [kg/m$^3$] is the liquid density of $CF_4$, and $\lambda_{CF4}$ [J/kg] is the vaporization heat of $CF_4$.

Since $CF_4$, which is a low boiling point component contained in the second mixed fluid F2, evaporates faster, ozone is concentrated in the second mixed fluid F2. If the ozone concentration in the second mixed fluid F2 exceeds the lower explosive limit, the presence of substances that can become ignition sources (hydrocarbons, metal particles, and the like) may lead to explosive decomposition, creating a dangerous situation.

As disclosed in Japanese Patent No. 5620705 (Patent Document 1), the amount of gas that can be processed in the photoreaction step of the concentration method of the present embodiment is on the order of several L/min at most. Assuming that the flow rate of the second mixed fluid F2 introduced from the photoreaction cell 7 into the liquid storage section 10, which is converted to gas flow rate, is 1 L/min, the time $t_2$ [min] required for accumulating the second mixed fluid F2 so that the hydraulic head is 8.1 m is calculated by the following formula (6).

$$t_2 = \frac{\left(\frac{D_1}{2}\right)^2 \pi L p_{CF4} \times 10^3}{n_{CF4} \times 1} \times 22.4 \qquad \cdots (6)$$

$$= \frac{\left(\frac{0.01}{2}\right)^2 \pi \times 8.1 \times 1571 \times 22.4 \times 10^3}{88} \cong 254 \min$$

In the formula (6) above, $n_{CF4}$ is the molecular weight of $CF_4$.

The calculated time t2 is larger than the previously calculated time $t_1$. Even if the second mixed fluid F2 is constantly introduced from the photoreaction cell 7 into the liquid storage section 10, the amount of evaporation of the second mixed fluid F2 from the liquid storage section 10 per unit time exceeds the amount of the second mixed fluid F2 introduced into the liquid storage section 10. Therefore, the danger of ozone concentration in the second mixed fluid F2 stored in the liquid storage section 10 cannot be eliminated.

However, when not only is the inner tube 10a of the liquid storage section 10 covered with a heat insulating layer made of a heat insulating material, but the inner tube 10a is also cooled by low-temperature fluid (liquid nitrogen LN) flowing through the outer tube 10b, evaporation of the second mixed fluid F2 due to heat input to the inner tube 10a is eliminated, and the danger of ozone concentration in the second mixed fluid F2 is eliminated. Therefore, there is no need for a step of refluxing the diluent substance into the liquid storage section, as in the concentration method disclosed in Japanese Patent No. 5,620,705.

Further, since evaporation of the second mixed fluid F2 due to heat input to the inner tube 10a is eliminated, fluctuations in the hydraulic head of the liquefied second mixed fluid F2 are suppressed. By performing feedback control of the opening degree of the valve V6 using the measured value of hydraulic head, it becomes possible to keep hydraulic head. If the hydraulic head is too large, the condensation speed of the second mixed fluid F2 will be low, so the second mixed fluid F2 led out from the photoreaction cell 7 will have nowhere to go, and the pipe pressure and the pressure in the photoreaction cell 7 will increase. When the pressure of the photoreaction cell 7 increases in the photoreaction step, the selectivity of the ozone isotopologue decreases, and there is a possibility that the oxygen isotope concentration in the product oxygen PO decreases.

In the liquid storage section introduction step in the concentration method of the present embodiment, the pressure in the inner tube 10a is maintained low, so the pressure in the photoreaction cell 7 is not increased and the selectivity of ozone isotopologues is not reduced. That is, it does not reduce the oxygen isotope concentration in the product oxygen PO.

<Separation step>

The separation step is a step of leading out the liquefied second mixed fluid F2 into the separation column 21 using the hydraulic head obtained by liquefying the second mixed fluid F2 and storing it in the liquid storage section 10 to distill, and separating the liquefied second mixed fluid F2 into the third mixed fluid F3 in which ozone and the diluent substance DS are mixed, and the product oxygen PO in which oxygen isotope heavy components are concentrated.

The second mixed fluid F2 which are led out from the bottom of the liquid storage section 10 are introduced into the separation column 21 and distilled. Through the distillation, the product oxygen PO enriched with the target oxygen isotope is led out from the top of separation column 21, and the third mixed fluid F3, in which ozone and the diluent substance DS are mixed, is led out from the bottom of the separation column 21.

Note that the separation column 21 is preferably operated at a pressure higher than atmospheric pressure so that it is not necessary to use the power of a compressor or the like when leading out the product oxygen PO from the separation column 21. The pressure higher than atmospheric pressure when operating the separation column 21 is, for example, 140 kPa.

Most of the product oxygen PO led out from the top of the separation column 21 is recovered as a product, but some is introduced into the second condenser 22 and liquefied, and is returned to the top of separation column 21 as the second reflux liquid R2. Further, a part of the third mixed fluid F3 led out from the bottom of the separation column 21 is introduced into the second reboiler 23, vaporized, and introduced into the separation column 21 as the second ascending gas B2.

<Ozone decomposition step>

The ozone decomposition step is a step of decomposing ozone in the third mixed fluid F3.

The remainder of the third mixed fluid F3 led out from near the bottom of the separation column 21 is introduced into the ozone decomposition device 24, at which ozone is completely decomposed. As a result, the third mixed fluid F3 after ozone decomposition contains only oxygen and the diluent substance DS.

<Diluent substance recovery step>

The diluent substance recovery step is a step of introducing the third mixed fluid F3 in which ozone has been decomposed into the second distillation column 25 and distilling to recover the diluent substance DS.

The third mixed fluid F3 only containing oxygen and the diluent substance after ozone decomposition is introduced into the second distillation column 25. Oxygen with a reduced isotope concentration, which is a low boiling point component, is led out from the top of the second distillation column 25 as the exhaust gas EX. Apart of the exhaust gas EX led out from the top of the second distillation column 25 is introduced into the third condenser 26 and liquefied, and is introduced into the top of the second distillation column 25 as the third reflux liquid R3. Further, a part of the diluent substance DS led out from the bottom of the second distillation column 25 is introduced into the third reboiler 27, vaporized, and introduced into the second distillation column 25 as the third ascending gas B3.

Further, the remainder of the diluent substance DS led out from the bottom of the second distillation column 25 flows back into the first distillation column 2. Specifically, the diluent substance DS led out from the bottom of the second distillation column 25 is pressurized by the pump 28 and introduced into the first distillation column 2 by operating the valve V1.

In the concentration method of the present embodiment, unlike the concentration method disclosed in Patent No. 5620705 (Patent Document 1), a desired hydraulic head can be obtained without introducing the diluent substance DS recovered in the second distillation column 25 into the liquid storage section 10.

[Effect]

Evaporation of the liquefied second mixed fluid F2 due to heat input can be prevented, and ozone concentration can be prevented by configuring the liquid storage section 10 to be able to store the liquefied second mixed fluid F2 without being affected by heat input, for example, by making the liquid storage section 10 a double tube structure including the inner tube 10a into which the second mixed fluid F2 is introduced, and the outer tube 10b through which the low-temperature fluid that can condense the second mixed fluid F2 introduced into the inner tube 10a flows. Furthermore, it is possible to eliminate the danger of explosions and the like caused by highly concentrated ozone, and to realize a safe device.

Further, there is no need to flow back the diluent substance DS from the second distillation column 25 into the liquid storage section 10 in order to prevent ozone concentration, and it is possible to suppress the increase in size of the apparatus.

Fluctuations in the hydraulic head of the liquid storage section 10 can be suppressed, and in turn pressure fluctuations in the photoreaction step can be suppressed. This leads to stabilization of the product isotope concentration.

EXPLANATION OF SYMBOLS

| | |
|---|---|
| 1 | ozonizer |
| 2 | first distillation column |
| 4 | first condenser |
| 5 | first reboiler |
| 7 | photoreaction cell |
| 10 | liquid storage section |
| 10a | inner tube |
| 10b | outer tube |
| 11 | low-temperature fluid source (liquid nitrogen source) |
| 21 | separation column |
| 22 | second condenser |
| 23 | second reboiler |
| 24 | ozone decomposition device |
| 25 | second distillation column |
| 26 | third condenser |
| 27 | third reboiler |
| 28 | pump |
| 100 | concentrator, |
| V1, V2, V3, V4, V5, V6 | valve |
| F0 | 0th mixed fluid |
| F1 | first mixed fluid |
| F2 | second mixed fluid |
| F3 | third mixed fluid |
| DS | diluent substance |
| EX | exhaust gas |
| OX | oxygen |
| LN | low-temperature fluid (liquid nitrogen) |
| NX | vaporized low-temperature fluid (nitrogen) |
| PO | product oxygen |
| RO | raw material oxygen |
| R1 | first reflux liquid |
| R2 | second reflux liquid |
| R3 | third reflux liquid |
| B1 | first ascending gas |
| B2 | second ascending gas |
| B3 | third ascending gas |

**Claims**

1. An oxygen concentration method, comprising:

a photoreaction step of irradiating a first mixed fluid in which oxygen and a diluent substance are mixed with a laser, selectively decomposing ozone containing an oxygen isotope,
and generating oxygen containing an oxygen isotope, and obtaining a second mixed fluid in which the oxygen, the ozone, and the diluent substance are mixed;
a liquid storage section introduction step of introducing the second mixed fluid into a liquid storage section and liquefying it; and
a separation step of introducing the second mixed fluid with hydraulic head obtained by liquefying the second mixed fluid and storing it in the liquid storage section, into a separation column, distilling the second mixed fluid which has liquefied, and separating into a third mixed fluid in which ozone and the diluent substance are mixed, and product oxygen in which oxygen isotope heavy components are concentrated;
wherein the liquid storage section can store the liquefied second mixed fluid without being affected by heat input.

2. The oxygen isotope concentration method according to Claim 1, wherein the oxygen isotope concentration method further comprises:

   before the photoreaction step,
   an ozonization step of ozonizing a part of a raw material oxygen, and obtaining a 0th mixed fluid in which oxygen and ozone are mixed; and
   a distillation step of introducing the 0th mixed fluid and the diluent substance into a first distillation column, distilling them, and separating them into the first mixed fluid in which ozone and the diluent substance are mixed and oxygen.

3. The oxygen isotope concentration method according to Claim 1 or 2, wherein the oxygen isotope concentration method further comprises:

   after the separation step,
   an ozone decomposition step of decomposing ozone in the third mixed fluid; and
   a diluent substance recovery step of introducing the third mixed fluid in which ozone has been decomposed into a second distillation column, distilling it, and recovering the diluent substance.

4. The oxygen isotope concentration method according to any one of Claims 1 to 3, wherein the liquid storage section comprises an inner tube into which the second mixed fluid is introduced, and an outer tube through which a low-temperature fluid capable of condensing the second mixed fluid introduced into the inner tube flows, and the liquid storage section has a double tube structure that allows the second mixed fluid to be stored in the inner tube without being affected by heat input.

5. The oxygen isotope concentration method according to Claim 4, wherein the low-temperature fluid is liquid nitrogen.

6. The oxygen isotope concentration method according to any one of Claims 1 to 5, wherein the diluent substance is at least one selected from the group consisting of krypton, xenon, radon, and carbon tetrafluoride.

7. An oxygen isotope concentration apparatus for carrying out the oxygen isotope concentration method according to any one of Claims 1 to 6, comprising:

   a photoreaction cell that selectively decomposes ozone containing an oxygen isotope;
   a liquid storage section into which the second mixed fluid is introduced and liquefied; and
   a separation column that carries out the separation step.

8. The oxygen isotope concentration apparatus according to Claim 7, wherein the liquid storage section comprises an inner tube into which the second mixed fluid is introduced, and an outer tube through which a low-temperature fluid capable of condensing the second mixed fluid introduced into the inner tube flows, and the liquid storage section has a double tube structure that allows the second mixed fluid to be stored in the inner tube without being affected by heat input.

FIG. 1

<table>
<tr><td colspan="2" style="text-align:center">INTERNATIONAL SEARCH REPORT</td><td>International application No.<br><br>**PCT/JP2022/028944**</td></tr>
</table>

**A.    CLASSIFICATION OF SUBJECT MATTER**

*B01D 59/34*(2006.01)i; *B01D 59/04*(2006.01)i; *C01B 13/10*(2006.01)i
FI:    B01D59/34 A; B01D59/04; C01B13/10 D

According to International Patent Classification (IPC) or to both national classification and IPC

**B.    FIELDS SEARCHED**

Minimum documentation searched (classification system followed by classification symbols)

B01D59/34; B01D59/04; C01B13/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C.    DOCUMENTS CONSIDERED TO BE RELEVANT**

| Category* | Citation of document, with indication, where appropriate, of the relevant passages | Relevant to claim No. |
|---|---|---|
| A | JP 2010-194495 A (TAIYO NIPPON SANSO CORP.) 09 September 2010 (2010-09-09) | 1-8 |
| A | JP 2011-224426 A (TAIYO NIPPON SANSO CORP.) 10 November 2011 (2011-11-10) | 1-8 |
| A | JP 2020-89865 A (TAIYO NIPPON SANSO CORP.) 11 June 2020 (2020-06-11) | 1-8 |
| A | JP 2011-161383 A (TAIYO NIPPON SANSO CORP.) 25 August 2011 (2011-08-25) | 1-8 |
| A | JP 2010-194496 A (TAIYO NIPPON SANSO CORP.) 09 September 2010 (2010-09-09) | 1-8 |
| A | JP 2005-40668 A (TAIYO NIPPON SANSO CORP.) 17 February 2005 (2005-02-17) | 1-8 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 October 2022** | **18 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/028944**

| Patent document cited in search report | | | Publication date (day/month/year) | Patent family member(s) | | | Publication date (day/month/year) |
|---|---|---|---|---|---|---|---|
| JP | 2010-194495 | A | 09 September 2010 | (Family: none) | | | |
| JP | 2011-224426 | A | 10 November 2011 | (Family: none) | | | |
| JP | 2020-89865 | A | 11 June 2020 | (Family: none) | | | |
| JP | 2011-161383 | A | 25 August 2011 | (Family: none) | | | |
| JP | 2010-194496 | A | 09 September 2010 | (Family: none) | | | |
| JP | 2005-40668 | A | 17 February 2005 | US | 2006/0249366 | A1 | |
| | | | | WO | 2004/078325 | A1 | |
| | | | | EP | 1604729 | A1 | |

Form PCT/ISA/210 (patent family annex) (January 2015)

16

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5620705 B

- WO 5620705 A

**Non-patent literature cited in the description**

- **TAKAAKI MIZUTANI.** Minimum ignition energy of Ozone/Oxygen mixed gas. *Occupational Safety and Health Research,* 2009, vol. 2 (1), 45-48